# EUROPEAN PATENT APPLICATION

(11) **EP 4 779 846 A1**
(43) Date of publication of application: **22.07.2026**
(21) Application number: 25215244.2
(22) Date of filing: 12.11.2025
(51) Int. Cl.: H02K 5/22, H02K 11/33, F04B 49/06, F04B 53/00, F04B 53/16, F04B 17/03

(54) **PUMP UNIT**

(30) Priority: 16.01.2025 CN 202510070229
(71) Applicant: Anhui Shinhoo Canned Motor Pump Co., Ltd., Hefei City, Anhui Province 230088 (CN)
(72) Inventor: Han, Zongmei, Hefai City, 230088 (CN); Wang, Yuan, Hefei City, 230088 (CN); Ding, Junfeng, Hefei City, 230088 (CN)
(74) Representative: karo IP

(57) **Abstract**

Disclosed in the present disclosure is a pump unit, belonging to the field of pumps. According to the pump unit disclosed in the present disclosure, a conductive element (400) is integrally formed on a heat insulation plate (300), the conductive element is provided with a first hot-pluggable connector (401) and a second hot-pluggable connector (402), and the first hot-pluggable connector is electrically connected to a circuit control board (120); the second hot-pluggable connector is electrically connected to a motor body (220); and the conductive element is at least partially located in the plate body, and the conductive element and the plate body are integrally formed and electrically insulated from each other. According to the present disclosure, functions of heat insulation and wire adaption are implemented by using the heat insulation plate (300), an assembly process of the heat insulation plate and the wire adaption is effectively simplified.

## Description

The present disclosure relates to the technical field of pumps, and in particular to a pump unit.

A structure of a pump unit includes a motor and a control box. A circuit control board is mounted in the control box and is connected to the motor through a wire adaption structure. To prevent heat of the motor from being transferred to the inside of the control box, a heat insulation plate is preferably arranged between a motor seat and the control box for heat insulation. Since the heat insulation plate is arranged between the motor seat and the control box for insulation, and the wire adaption structure needs to switch on the motor and the control box simultaneously, mounting cooperation between wire adaption and the heat insulation plate is particularly important. Currently, a common manner is that sufficient clearance avoidance space is reserved in an edge area of a heat insulation plate. Based on that the heat insulation plate is separately mounted in cooperation with a motor and a control box, the wire adaption structure can pass through the avoidance space, and is separately mounted in cooperation with the motor and the control box. In this way, the heat insulation plate and the wire adaption are separately mounted, and do not interfere with each other. During production and mounting in this manner, an assembly process is complex, a cooperation accumulated error is increased, and production cost of the heat insulation plate and the wire adaption structure are high, and production efficiency is reduced, thereby further increasing overall cost of a pump.

An objective of the present disclosure is to provide a pump unit for a case in the existing technology in which an assembly process of a heat insulation plate and a wire adaption structure is complex and production efficiency is low. The pump unit can effectively simplify the assembly process of the heat insulation plate and the wire adaption, improve production efficiency, and reduce production cost.

In order to achieve the foregoing objective, the a pump unit according to Claim 1 is proposed. The dependent claims refer to embodiments thereof.

In order to achieve the foregoing objective, the present disclosure provides the following technical solutions.

The present disclosure provides a pump unit. The pump unit includes:
a control box, where the control box includes a box seat and a circuit control board arranged in an inner cavity of the box seat;
a motor, where the motor includes a motor seat and a motor body arranged in an inner cavity of the motor seat; and
a heat insulation plate, where the heat insulation plate includes a plate body, and the plate body is mounted between the box seat and the motor seat.

A conductive element is arranged on the plate body. The conductive element is provided with a first hot-pluggable connector and a second hot-pluggable connector. The first hot-pluggable connector is located at one side of the plate body facing the box seat and is electrically connected to the circuit control board. The second hot-pluggable connector is located at one side of the plate body facing the motor seat and is electrically connected to the motor body. The conductive element is at least partially located in the plate body. The conductive element and the plate body are integrally formed and electrically insulated from each other.

Optionally, the box seat is mounted at a tail end of the motor seat in an axial direction. The plate body is mounted between two end wall surfaces of the box seat and the motor seat that are relatively close to each other.

Optionally, the conductive element includes an inner conductive body and a housing covering an outer side of the conductive body. Two ends of the conductive body are respectively provided as the first hot-pluggable connector and the second hot-pluggable connector. The first hot-pluggable connector and the second hot-pluggable connector extend out of the housing. The housing and the conductive body are integrally formed.

Optionally, the housing of the conductive element is at least partially located inside the plate body. The first hot-pluggable connector and the second hot-pluggable connector extend beyond a plate surface of the plate body. The housing of the conductive element and the plate body are integrally formed.

Optionally, the housing of the conductive element and the conductive body are integrally formed by injection molding; or/and, the housing of the conductive element and the plate body are integrally formed by injection molding.

Optionally, the first hot-pluggable connector and the second hot-pluggable connector of the conductive element are staggered on two sides of the plate body in a transverse direction relative to a pluggable direction and extend beyond a plate surface of the plate body. the first hot-pluggable connector and the second hot-pluggable connector are electrically connected through a conductive connector. The conductive connector is at least partially wrapped inside the plate body.

Optionally, the conductive element includes an inner conductive body and a housing covering an outer side of the conductive body. Two ends of the conductive body are respectively provided as the first hot-pluggable connector and the second hot-pluggable connector. The first hot-pluggable connector and the second hot-pluggable connector extend out of the housing. The housing and the conductive body are integrally formed by injection molding. The housing and the plate body are integrally formed by injection molding.

Optionally, the box seat and the motor seat are respectively provided with mounting holes in communication with the inner cavities. The first hot-pluggable connector passes through the mounting hole on the box seat and is electrically connected to the circuit control board. The second hot-pluggable connector passes through the mounting hole on the motor seat and is electrically connected to the motor body. A seal is arranged between the mounting hole on the box seat and a contact surface of the plate body for sealing, and a seal is arranged between the mounting hole on the motor seat and a contact surface of the plate body for sealing.

Optionally, the conductive element includes an inner conductive body and a housing covering an outer side of the conductive body. Two ends of the conductive body are respectively provided as the first hot-pluggable connector and the second hot-pluggable connector. The first hot-pluggable connector and the second hot-pluggable connector extend out of the housing. The housing of the conductive element extends beyond a plate surface of the plate body and extends into the mounting holes on the box seat and the motor seat separately.

Optionally, a first annular wall protruding outwards is arranged on a plate surface of the plate body facing the box seat. A groove space is formed in the first annular wall. The first hot-pluggable connector penetrates out from the groove space of the first annular wall. The seal is arranged in the groove space. An outside of the mounting hole on the box seat is provided with an annular mounting wall protruding from the box seat. A tail end of the annular mounting wall is fittingly embedded in the groove space and abuts against the seal. A seal between the plate body and the motor seat adopts same arrangement.

Optionally, a ring of first rib protruding outwards is formed on an upper portion of the housing of the conductive element. The first rib is located in the groove space of the first annular wall. An upper surface of the first rib is flush with an upper surface of the seal in the first annular wall.

Optionally, a plurality of groups of forming hole positions are provided on two opposite side surfaces of the housing of the conductive element respectively. The forming hole positions extend inwards to expose the conductive body inside. Each side surface on two sides of the housing is provided with at least two groups of forming hole positions separately in a length extension direction of the conductive body.

Optionally, a protective wall protruding outwards is further provided on a plate surface of the side of the plate body facing the motor seat. An open cavity for accommodating the second hot-pluggable connector is formed in the protective wall. The second hot-pluggable connector is hidden in the open cavity.

Optionally, the first hot-pluggable connector is provided with a kidney-shaped hole as a plug connection hole position. A fixing connector passes through the plug connection hole position to press the first hot-pluggable connector onto a plug end of the circuit control board. Then the first hot-pluggable connector makes fixed contact with the plug end of the circuit control board in an electrically communication manner.

Optionally, an area of the plate surface of the plate body at least completely covers an end area of the box seat or the motor seat. The first hot-pluggable connector and the second hot-pluggable connector extend and are distributed in a thickness direction of the plate body. The first hot-pluggable connector or the second hot-pluggable connector is distributed in a region close to a peripheral edge of the plate body.

Compared with the prior art, the technical solution provided in the present disclosure has the following beneficial effects:
According to the pump unit in the present disclosure, the conductive element is integrally formed on the heat insulation plate, such that functions of heat insulation and wire adaption are implemented by using one heat insulation plate. Since the heat insulation plate and the conductive element are in an integrated structure, only an integral component needs to be mounted and fixed during mounting and assembly. Complexity and assembly time of the assembly process are reduced. An accumulated error is reduced. Production efficiency and the product stability are effectively improved. Cost of processing raw materials and processing molds is effectively saved.

According to the pump unit in the present disclosure, the first hot-pluggable connector and the second hot-pluggable connector are staggered on two sides of the plate body in a transverse direction relative to a pluggable direction, the first hot-pluggable connector and the second hot-pluggable connector can correspond to positions of plug connection ends on the circuit control board and the motor body separately, such that adaptability of the heat insulation plate is improved.

According to the pump unit in the present disclosure, the conductive element is an independent integral molded part. First, the conductive body and the housing are integrally formed by injection molding, to guarantee that a relative position and a size of the conductive body are accurate. A problem that the conductive body is deformed and displaced due to large injection pressure when the conductive body and the heat insulation plate are formed by direct injection is avoided. Then the independent conductive element and the heat insulation plate are subjected to secondary injection. In this case, the relative position of the conductive body is fixed, and the strength is effectively strengthened. The conductive body is difficult to deform in a secondary injection stage of forming the heat insulation plate. Thus, product accuracy and strength are guaranteed.

The attached figures show the following:
FIG. 1 is a schematic structural diagram of a pump unit according to an embodiment;
FIG. 2 is a schematic diagram of an internal sectional structure of a pump unit according to an embodiment;
FIG. 3 is a partially enlarged schematic structural diagram of position A in FIG. 2;
FIG. 4 is a schematic diagram showing a state after a control box is removed from a pump unit according to an embodiment;
FIG. 5 is a schematic diagram showing a state in which a conductive element is separately connected to a motor body and a circuit control board according to an embodiment;
FIG. 6 is a schematic diagram showing a distribution state of a conductive body according to an embodiment;
FIG. 7 is a schematic structural diagram of an integrally formed conductive body according to an embodiment;
FIG. 8 is a schematic structural diagram of FIG. 7 from a rear view;
FIG. 9 is a schematic diagram of an entire structure of a heat insulation plate and a conductive element according to an embodiment;
FIG. 10 is a schematic diagram of an internal sectional structure of FIG. 9;
FIG. 11 is a schematic structural diagram of FIG. 9 from a bottom view;
FIG. 12 is a schematic structural diagram of an independent heat insulation plate according to an embodiment;
FIG. 13 is a schematic structural diagram of FIG. 12 from a bottom view; and
FIG. 14 is a schematic diagram of an internal sectional structure of FIG. 12.

To further understand the content of the present disclosure, the present disclosure is described in detail with reference to the accompanying drawings.

In the description of the present disclosure, it should be noted that the orientation or position relations indicated by the terms "center", "up", "down", "left", "right", "vertical", "horizontal", "inner", "outer", etc. are based on the orientation or position relationships shown in the accompanying drawings, are merely for facilitating the description of the present disclosure and simplifying the description, rather than indicating or implying that the device or element referred to must have a particular orientation or be constructed and operated in a particular orientation, and therefore cannot be interpreted as limiting the present disclosure.

Moreover, it should be noted that the terms "mount", "connect", and "connection" should be understood in a broad sense, for example, they can denote a fixed connection, a detachable connection, an integrated connection, a mechanical connection, an electrical connection, a direct connection, an indirect connection via an intermediate medium, or communication inside two elements, unless otherwise explicitly specified and defined. The terms "first", "second", "third" and "fourth" should be understood in a broad sense and only to distinguish names of characteristics, and do not indicate a specific order relationship. For those of ordinary skill in the art, the specific meanings of the above terms in the present disclosure can be understood according to specific circumstances.

The present disclosure will be further described below with reference to the embodiments.

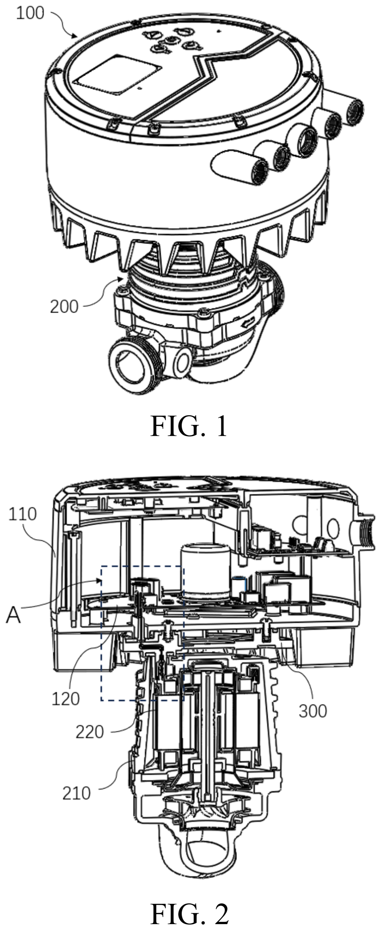

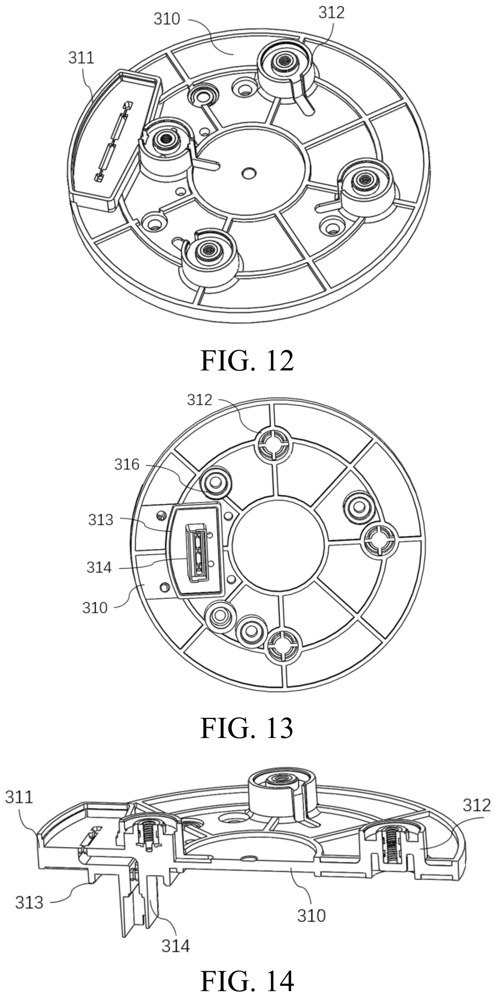

With reference to FIG. 1 to FIG. 14, the embodiment provides a pump unit. The pump unit comprises:
a control box 100, where the control box 100 comprises a box seat 110 and a circuit control board 120 arranged in an inner cavity of the box seat 110;
a motor 200, where the motor 200 comprises a motor seat 210 and a motor body 220 arranged in an inner cavity of the motor seat 210; and
a heat insulation plate 300, where the heat insulation plate 300 comprises a plate body 310, and the plate body 310 is mounted between the box seat 110 and the motor seat 210, to block heat transfer between the box seat 110 and the motor seat 210, so as to prevent a large amount of heat in the motor seat 210 from being transferred to the control box 100. Specifically, a plurality of groups of first mounting portions 312 are provided on a plate surface of the heat insulation plate 300 facing a side of the box seat 110. Bolt mounting holes are provided on the first mounting portions 312, to fixedly mount the first mounting portions 312 to the box seat 110 by bolting. A plurality of groups of second mounting portions 316 are correspondingly provided on a plate surface of the heat insulation plate 300 facing a side of the motor seat 210, to fixedly mount the second mounting portions 316 to the motor seat 210 by bolting.

It should be noted that in the design, a conductive element 400 is arranged on the plate body 310. The conductive element 400 is provided with a first hot-pluggable connector 401 and a second hot-pluggable connector 402. The first hot-pluggable connector 401 is located at one side of the plate body 310 facing the box seat 110 and is electrically connected to the circuit control board 120. The second hot-pluggable connector 402 is located at one side of the plate body 310 facing the motor seat 210 and is electrically connected to the motor body 220, specifically, is electrically connected to a stator assembly of the motor. The conductive element 400 is at least partially located inside the plate body 310. The conductive element 400 and the plate body 310 are integrally formed and electrically insulated from each other. That is, electrical communication between the circuit control board 120 and the motor body 220 is implemented by using the conductive element 400. Heat is insulated by using the plate body 310. The conductive element 400 and the plate body 310 are electrically insulated from each other. In practice, the conductive element 400 may have a pin structure.

According to the design, the conductive element 400 is integrally arranged on the heat insulation plate 300, such that functions of heat insulation and wire adaption are implemented by using one heat insulation plate 300. Since the heat insulation plate 300 and the conductive element 400 are in an integrated structure, only an integral component needs to be mounted and fixed during mounting and assembly. Complexity and assembly time of the assembly process are reduced. An accumulated error is reduced. Production efficiency and the product stability are effectively improved. Moreover, a conventional wire adapter component and the heat insulation plate 300 component are combined into a single component, such that cost of processing raw materials and processing molds is effectively saved. Production efficiency and market competitiveness of products are greatly improved.

In conjunction with FIG. 1 to FIG. 5, in the design, the box seat 110 is mounted at a tail end of the motor seat 210 in an axial direction. The plate body 310 is mounted between two end wall surfaces of the box seat 110 and the motor seat 210 that are relatively close to each other. For example, the motor seat 210 is a seat body with an annular section. That is, the box seat 110 is arranged at a tail end of the motor seat 210 in a direction of an axial length. The box seat 110 and the motor seat 210 are arranged one above the other sequentially in the axial direction. In this case, heat generated inside the motor is directly transmitted to the box seat 110 easily. The plate body 310 is arranged between the box seat 110 and the motor seat 210, such that the heat can be blocked more conveniently, and the conductive element 400 on two sides of the plate surface can be correspondingly connected to the circuit control board 120 and the motor body 220 conveniently in the vertical direction.

As a different implementation, the conductive element 400 and the plate body 310 may be directly and integrally formed. For example, a conductive pin is used as the conductive element 400. Then the conductive pin and the plate body 310 may be directly integrally formed by injection molding or in another forming manner. In some other preferred embodiments, the conductive element 400 comprises an inner conductive body and a housing covering an outer side of the conductive body. For example, a conductive pin is used as the conductive body, and the housing is formed at an outer side of the conductive pin. Two ends of the conductive body are respectively provided as the first hot-pluggable connector 401 and the second hot-pluggable connector 402. The first hot-pluggable connector 401 and the second hot-pluggable connector 402 extend out of the housing. The housing and the conductive body are integrally formed. In this case, the conductive body and the housing at the outer side are first integrally formed to pre-position and mount the conductive body and strengthen a structure of the conductive body. Further, the housing of the conductive element 400 is at least partially located inside the plate body 310. The first hot-pluggable connector 401 and the second hot-pluggable connector 402 extend beyond a plate surface of the plate body 310. The housing of the conductive element 400 and the plate body 310 are integrally formed. In this case, the conductive element 400 and the plate body 310 are formed in a twice-forming manner, that is, the conductive body and the housing of the conductive element 400 are first integrally formed into an independent component, and then the formed conductive element 400 and the plate body 310 are integrally formed. In practice, an integral forming manner comprises a plurality of manners such as injection molding. For example, the conductive body and the housing of the conductive element 400 may be formed through integral injection molding; or, the formed conductive element 400 and the plate body 310 may be formed through integral injection molding, or an injection molding manner may be used for two forming processes.

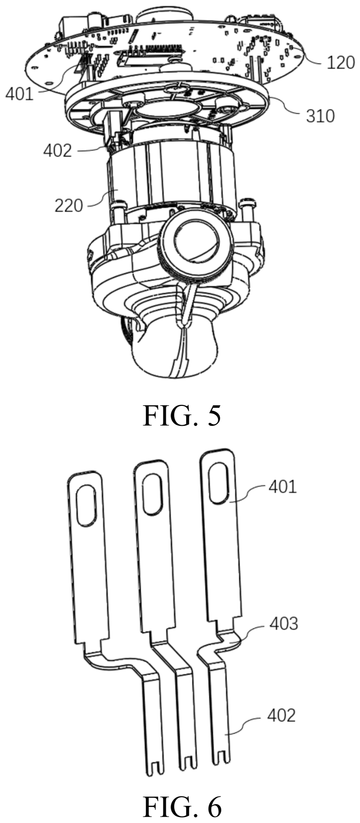

In some embodiments, in conjunction with FIG. 6 to FIG. 10, the first hot-pluggable connector 401 and the second hot-pluggable connector 402 of the conductive element 400 are staggered on two sides of the plate body 310 in a transverse direction relative to a pluggable direction and extend beyond a plate surface of the plate body 310. The first hot-pluggable connector 401 and the second hot-pluggable connector 402 are electrically connected through a conductive connector 403. The conductive connector 403 is at least partially wrapped inside the plate body 310. The conductive connector 403 extends laterally in the plate body 310. The pluggable direction is an up-down mounting direction. With a circular plate body 310 as an example, the first hot-pluggable connector 401 and the second hot-pluggable connector 402 extend on the two sides of the plate body 310 in the axial direction. The conductive connector 403 may extend in the plate body 310 in a radial direction. In this way, the conductive element 400 is wholly distributed in a Z-like shape. Through the design, the first hot-pluggable connector 401 and the second hot-pluggable connector 402 are distributed in a staggered manner, which helps improve adaptability of the heat insulation plate 300. Different sizes of the circuit control board 120 and the motor body 220 can be adapted by adjusting transverse staggered positions. Similarly, the conductive connector 403 may alternatively be inclined or bent in the plate body 310 as long as a staggered deployment of the first hot-pluggable connector 401 and the second hot-pluggable connector 402 can be implemented.

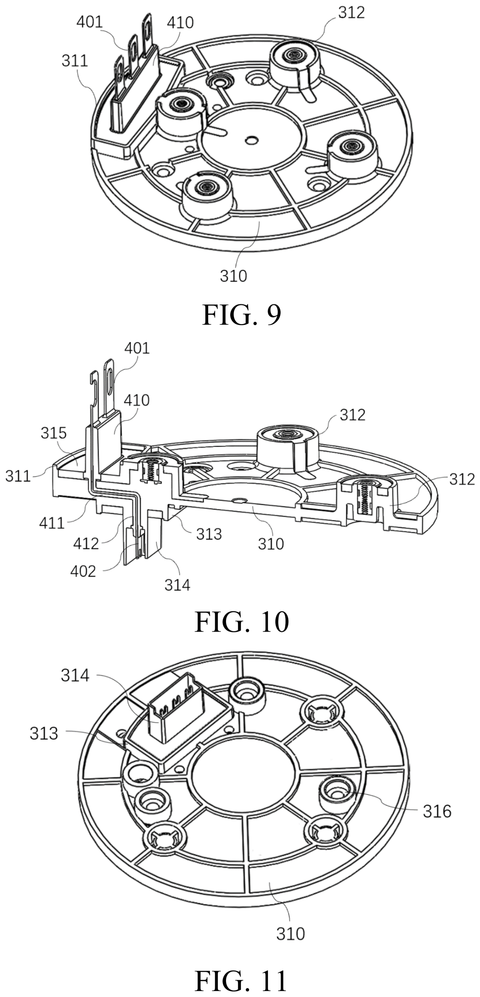

In a conventional technology, a pin for wire adaption usually penetrates the heat insulation plate 300 in a linear manner. With reference to an up-down orientation in FIG. 10, that is, the first hot-pluggable connector 401 and a second hot-pluggable connector 402 are completely aligned one above the other. With reference to a state shown in FIG. 5, it is inevitably required that positions of plug connection ends on the circuit control board 120 and the motor body 220 also need to be completely aligned one above the other. A practical situation is that size specifications of the circuit control board 120 and the motor body 220 are typically different, and an obviously size difference between the size of the power control board 120 and the size of the motor body 220 results in a fact that the positions of the plug connection ends of the circuit control board 120 and the motor body 220 cannot completely correspond one above the other. A conventional linear pin manner cannot adapt to use, and even the size specification of the circuit control board 120 or the motor body 220 needs to be adjusted. Consequently, a size of a pump body structure is increased, and the overall cost is increased.

In the design, the transversely extending conductive connector 403 is arranged between the first hot-pluggable connector 401 and the second hot-pluggable connector 402, such that the first hot-pluggable connector 401 and the second hot-pluggable connector 402 can be staggered. According to an actual requirement, respective positions of the first hot-pluggable connector 401 and the second hot-pluggable connector 402 in a transverse direction may be adjusted, such that the respective positions correspond to the positions of the plug connection ends on the circuit control board 120 and the motor body 220. Accordingly, overall adaptability between the heat insulation plate 300 and the conductive element 400 can be improved. When the size specification of the circuit control board 120 or the motor body 220 is changed, a distribution position of the conductive element 400 in the insulation plate 300 is redesigned, and an integral structure of the heat insulation plate 300 and the conductive element 400 may be simply replaced, which is more flexible and convenient.

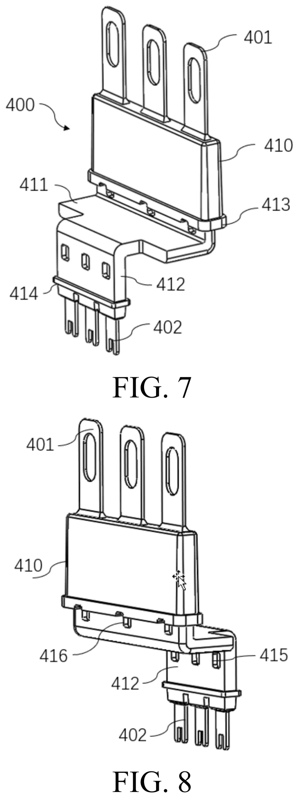

With reference to the foregoing analysis, when the first hot-pluggable connector 401 and the second hot-pluggable connector 402 are staggered through the conductive connector 403, the structure of the conductive element 400 is more complex compared with a conventional linear pin, and positioning difficulty is higher in a process of integrally forming of the conductive element 400 and the plate body 310. In this case, a twice-forming manner is more preferred. Using injection molding as an example, in some embodiments, preferably, the conductive body and the housing are integrally formed by injection molding first, and the first hot-pluggable connector 401 and the second hot-pluggable connector 402 extend beyond the housing. Then, the housing and the plate body 310 are integrally formed by injection molding. FIG. 6 is a schematic structural diagram of the conductive body of the conductive element 400. Two ends of the conductive body are respectively provided as the first hot-pluggable connector 401 and the second hot-pluggable connector 402. Electrical communication is implemented between the two hot-pluggable connectors through the transversely extending conductive connector 403. In this case, first, primary injection is performed on the conductive body, to guarantee that a relative position and a size of the conductive body are accurate. Moreover, the injection housing on an outer layer forms strength protection of a particular thickness, to avoid a problem that the conductive body is deformed and displaced due to large injection pressure when the conductive body and the heat insulation plate 300 are formed by direct injection. First, primary injection is performed on the conductive body into an independent module shown in FIG. 7, and then secondary injection is performed on the separately-formed conductive element 400. In this case, the relative position of the conductive body is fixed, and strength is effectively strengthened relative to that of a single conductive body. The conductive body is difficult to deform in a secondary injection stage of forming the heat insulation plate 300. Thus, product accuracy and strength are guaranteed.

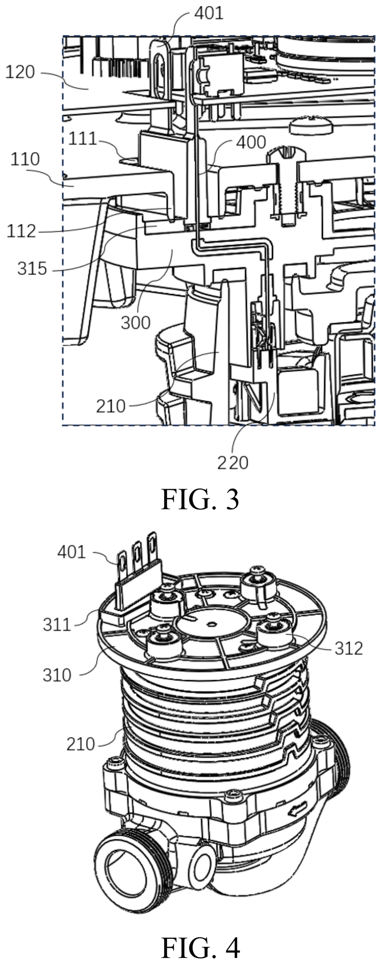

In conjunction with FIG. 3, in some embodiments, to achieve specific circuit communication between the first hot-pluggable connector 401 and the second hot-pluggable connector 402, the box seat 110 and the motor seat 210 are respectively provided with mounting hole 111 in communication with the inner cavities. The first hot-pluggable connector 401 passes through the mounting hole 111 on the box seat 110 and is electrically connected to the circuit control board 120. The second hot-pluggable connector 402 passes through the mounting hole 111 on the motor seat 210 and is electrically connected to the motor body 220. To further improve an overall sealing property of the integral heat insulation and adaption design, a seal 315 is arranged between the mounting hole 111 on the box seat 110 and a contact surface of the plate body 310 for sealing, and a seal 315 is arranged between the mounting hole 111 on the motor seat 210 and a contact surface of the plate body 310 for sealing. The seal 315 may use various forms such as a sealing ring and soft sealing rubber. Moreover, the seal 315 may be arranged on the plate body 310 or may be arranged on the box seat 110 and the motor seat 210. Effective sealing needs to be performed on intersections of the mounting holes 111 and the plate body 310. That is, the seals 315 are arranged between connection portions of the plate body 310 and the box seat 110, and between connection portions of the plate body 310 and the motor seat 210, to further prevent condensate water.

It should be noted that in some embodiments, it is further preferable that the housing outside the conductive element 400 not only extends beyond the plate surface of the plate body 310, but further extends into the mounting holes 111 in the box seat 110 and the motor seat 210. That is, the housing outside the first hot-pluggable connector 401 extends into the mounting hole 111 in the box seat 110, and the housing outside the second hot-pluggable connector 402 extends into the mounting hole 111 in the motor seat 210. Thus the housing has stronger support protection for the first hot-pluggable connector 401 and the second hot-pluggable connector 402, to prevent deformation or the like in an injection production process or a mounting process of the first hot-pluggable connector and the second hot-pluggable connector having low strength.

As a specific implementation of the seal 315, in some embodiments, in conjunction with FIG. 10, a first annular wall 311 protruding outwards is arranged on a plate surface of the side of the plate body 310 facing the box seat 110. A groove space is formed in the first annular wall 311. The first hot-pluggable connector 401 penetrates out from the groove space of the first annular wall 311. The seal 315 is arranged in the groove space. An outside of the mounting hole 111 on the box seat 110 is provided with an annular mounting wall 112 protruding from the box seat 110. A tail end of the annular mounting wall 112 is fittingly embedded in the groove space and abuts against the seal 315. In conjunction with FIG. 3, in practice, soft injection rubber is preferably used as the seal 315 for sealing. That is, the first annular wall 311 protruding outwards is formed at a stage of integral injection molding of the plate body 310 and the conductive element 400, and then the formed groove space is filled with soft sealing rubber in an injection manner. When the plate body 310 is mounted to the box seat 110, the annular mounting wall 112 on the box seat 110 can be embedded in the soft sealing rubber downwards, thereby guaranteeing effective sealing. Not only heat transfer can be blocked, but also formation of condensate water can be further avoided. Similarly, a seal 315 between the plate body 310 and the motor seat 210 adopts same arrangement. That is, a second annular wall 313 protruding outwards is arranged on the plate surface of the side of the plate body 310 facing the motor seat 210. A groove space is formed in the second annular wall 313. The second hot-pluggable connector 402 penetrates out from the groove space of the second annular wall 313. The seal 315 is arranged in the groove space through a soft sealing rubber in an injection manner. The mounting hole 111 of the motor seat 210 also has an annular mounting wall outside, which can abut against the soft sealing rubber to achieve effective sealing. In practice, the seal 315 may be soft sealing rubber of a thermoplastic elastomer (TPE) or thermoplastic polyurethane (TPU) for injection. The housing outside the conductive element 400 and the plate body 310 may be injection-molded by using hard rubber made of PA66+30GF.

In some embodiments, preferably, a protective wall 314 protruding outwards is further provided on a plate surface of the side of the plate body 310 facing the motor seat 210. An open cavity for accommodating the second hot-pluggable connector 402 is formed in the protective wall 314. The second hot-pluggable connector 402 is hidden in the open cavity. With reference to FIG. 11, the protective wall 314 completely covers the second hot-pluggable connector 402 inside, to form a peripheral protective cap. When the second hot-pluggable connector 402 is connected to a connection end of the motor body 220, the protective wall 314 may be arranged at an outer side of a connection position at which the second hot-pluggable connector is connected to the connection end of the motor body 220, and is insulated from the outside, thereby forming peripheral insulation protection to avoid a phenomenon of conduction breakdown. Specifically, when the second annular wall 313 is provided on the plate surface of the side of the plate body 310 facing the motor seat 210, the protective wall 314 is arranged inside the second annular wall 313. An extension length of the protective wall 314 exceeds the second annular wall 313. A seal 315 is arranged between the protective wall 314 and the second annular wall 313.

When further sealing is achieved using soft injection rubber, in some embodiments, preferably, a ring of first rib 413 protruding outwards is formed on an upper portion of the housing of the conductive element 400. The first rib 413 is located in the groove space of the first annular wall 311. An upper surface of the first rib 413 is flush with an upper surface of the seal 315 in the first annular wall 311. In practice, during injection of the soft sealing rubber, the first rib 413 can form a step-like structure on the housing of the conductive element 400, such that it is convenient for a positioning mold to compress against the first rib 413 from above to fix the conductive element 400. In this case, injection of the soft rubber is started in a lower space under the first rib 413, to avoid a situation that the soft rubber is pressed out between a contact surface of the positioning mold and the housing of the conductive element 400 to cause a flash, thereby effectively guaranteeing quality of injection molding of the soft rubber. Similarly, a lower portion of the housing of the conductive element 400 is also provided with a ring of second rib 414 protruding outwards. The second rib 414 is correspondingly located in the groove space of the second annular wall 313. The second rib 414 is formed in a step shape to facilitate compressing and positioning of the mold, and also help guarantee injection quality of the soft sealing rubber. Specifically, the first rib 413 is located on the housing of an outer periphery of the first hot-pluggable connector 401. The second rib 414 is located on the housing of an outer periphery of the second hot-pluggable connector 402. In conjunction with FIG. 7, corresponding to sequential distribution of the first hot-pluggable connector 401, the conductive connector 403, and the second hot-pluggable connector 402, the housing may sequentially comprise a first injection portion 410, a connecting injection portion 411, and a second injection portion 412. The first rib 413 is arranged at an outer periphery of the first injection portion 410, and the second rib 414 is arranged at an outer periphery of the second injection portion 412.

To guarantee accurate positioning of the conductive element 400 in the two molding processes, in some embodiments, a plurality of groups of forming holes are provided on two opposite side surfaces of the housing of the conductive element 400 respectively. The forming holes extend inwards to expose the conductive body inside. Each side surface on two sides of the housing of the conductive element 400 is provided with at least two groups of forming holes separately in a length extension direction of the conductive body. With reference to FIG. 6 to FIG. 8, specifically, three first holes 416 are formed on each of two opposite sides of the housing in a vicinity of a lower region of the first hot-pluggable connector 401 close to the conductive connector 403, that is, in a vicinity of a lower region of the first injection portion 410. Moreover, three second holes 415 are formed on each of two opposite sides of the housing in a vicinity of an upper region of the second hot-pluggable connector 402 close to the conductive connector 403, that is, in a vicinity of an upper region of the second injection portion 412. The first holes 416 extend inwards to expose the first hot-pluggable connector 401 inside. The second holes 415 extend inwards to expose the second hot-pluggable connector 402 inside. Three first holes 416 and three second holes 415 on each side are in a vertical one-to-one correspondence, and respectively correspond to upper and lower positions of the conductive body, such that two side surfaces of each conductive pin have an upper hole and a lower hole for positioning. During injection processing, positioning members on both sides are respectively pressed against the conductive body downwards and upwards for positioning. A structure of the first holes 416 and the second holes 415 is formed after injection molding. After primary injection, at a secondary injection stage of forming the heat insulation plate 300, an interior of the heat insulation plate 300 is correspondingly filled to cover the first holes 416 and the second holes 415. Overall positioning accuracy for the conductive element 400 is further enhanced, and deformation or displacement is prevented.

In practice, integral forming of the conductive element 400 and the plate body 310 also imposes higher requirements on mounting accuracy and flexibility of the integral structure. In some embodiments, further optimal design is as follows: the first hot-pluggable connector 401 is provided with a kidney-shaped hole as a plug connection hole. A fixing connector passes through the plug connection hole to press the first hot-pluggable connector 401 onto a plug end of the circuit control board 120. Then the first hot-pluggable connector 401 makes fixed contact with the plug end of the circuit control board 120 in an electrically communication manner. Specifically, a fastening bolt may be used as the fixing connector. When the first hot-pluggable connector 401 is connected to the circuit control board 120, the fastening bolt correspondingly passes through connection holes on the first hot-pluggable connector 401 and the plug end of the circuit control board 120 in sequence and is fastened, to compress and fix the first hot-pluggable connector 401 and the plug end of the circuit control board 120 to implement electric conduction communication. The kidney-shaped hole on the first hot-pluggable connector 401 extends in an up-down plug direction, such that a vertical activity space in the kidney-shaped hole is provided for the fastening bolt. Thus, when a deviation occurs in a position of the first hot-pluggable connector 401, the position of the fastening bolt in the kidney-shaped hole is adjusted, and then the first hot-pluggable connector 401 and the plug end of the circuit control board 120 can still be tightly connected. Stronger mounting adaptability and flexibility are achieved. Moreover, the kidney-shaped hole is arranged at a primary forming stage of the conductive element 400, that is, at a primary forming stage of the conductive body and the housing. The kidney-shaped hole can be used as a positioning hole. A positioning post that is embedded in the kidney-shaped hole is correspondingly arranged on the mold for cooperation. Thus the conductive body can be accurately positioned, and the accuracy of integral forming can be further guaranteed.

In some embodiments, preferably, an area of the plate surface of the plate body 310 at least completely covers an end area of the box seat 110 or the motor seat 210. In practice, an area of an end of the motor seat 210 is typically smaller, and the plate surface of the plate body 310 can at least completely cover the tail end surface of the motor seat 210, thereby insulating the box seat 110 from the motor seat 210 in a completely covering manner. Similarly, when an area of an end of the box seat 110 is smaller, the plate surface of the plate body 310 can at least completely cover an end surface of the box seat 110, such that complete insulation between the motor seat 210 and the box seat 110 can be implemented. A complete and sufficient heat insulation effect is satisfied. Power consumption of the entire pump unit is reduced. Power, lift, power consumption, and water efficiency of pumps are improved. The first hot-pluggable connector 401 and the second hot-pluggable connector 402 extend and are distributed in a thickness direction of the plate body 310, to facilitate in-line mounting. The first hot-pluggable connector 401 or the second hot-pluggable connector 402 is distributed in a region close to a peripheral edge of the plate body 310, to reduce an entire size of the plate body 310 as much as possible while satisfying overall insulation. Machining is facilitated. For example, in practice, the circuit control board 120 has a larger size than the motor body 220. In a transverse direction, a plug end on the circuit control board 120 faces more outwards than a plug end on the motor body 220. In this case, the first hot-pluggable connector 401 may be arranged in a region close to an edge of the plate body 310, and may fully adapt to a connection position of the circuit control board 120. Similarly, when a transverse size of the motor body 220 is larger, the second hot-pluggable connector 402 may alternatively be correspondingly arranged in a region close to the peripheral edge of the plate body 310.

In the embodiment, the conductive element 400 is integrally formed on the heat insulation plate 300, such that the heat insulation plate 300 has functions of heat insulation and wire adaption. A quantity of parts and difficulty in an assembly process are reduced. The production cost is reduced. Moreover, preferably, through twice injection molding, the conductive element 400 is first formed into an independent module through injection, and then the heat insulation plate 300 is formed through secondary injection. Thus position accuracy and strength of the conductive body are effectively guaranteed. Deformation or displacement is prevented. In this way, injection molding quality is effectively improved. The present disclosure is suitable for application.

The protection scope of the present disclosure is limited only by the claims. Those skilled in the art, having the benefit of the teachings of the present disclosure, will readily recognize that other configurations to the structures disclosed herein are possible embodiments as well, and that the disclosed embodiments may be combined to create further embodiments that likewise fall within the scope of the appended claims.

### List of numerals:

- 100: control box
- 110: box seat
- 111: mounting hole
- 112: annular mounting wall
- 120: circuit control board
- 200: motor
- 210: motor seat
- 220: motor body
- 300: heat insulation plate
- 310: plate body
- 311: first annular wall
- 312: first mounting portion
- 313: second annular wall
- 314: protective wall
- 315: seal
- 316: second mounting portion
- 400: conductive element
- 401: first hot-pluggable connector
- 402: second hot-pluggable connector
- 403: conductive connector
- 410: first injection portion
- 411: connecting injection portion
- 412: second injection portion
- 413: first rib
- 414: second rib
- 415: second hole
- 416: first hole

## Claims

1. A pump unit, comprising:
a control box (100), wherein the control box (100) comprises a box seat (110) and a circuit control board (120) arranged in an inner cavity of the box seat (110);
a motor (200), wherein the motor (200) comprises a motor seat (210) and a motor body (220) arranged in an inner cavity of the motor seat (210); and
a heat insulation plate (300), wherein the heat insulation plate (300) comprises a plate body (310), and the plate body (310) is mounted between the box seat (110) and the motor seat (210), wherein
a conductive element (400) is arranged on the plate body (310), the conductive element (400) is provided with a first hot-pluggable connector (401) and a second hot-pluggable connector (402), and the first hot-pluggable connector (401) is located at one side of the plate body (310) facing the box seat (110) and is electrical connected to the circuit control board (120); the second hot-pluggable connector (402) is located at one side of the plate body (310) facing the motor seat (210) and is electrical connected to the motor body (220); and the conductive element (400) is at least partially located in the plate body (310), and the conductive element (400) and the plate body (310) are integrally formed and electrically insulated from each other.

2. The pump unit according to claim 1, wherein the box seat (110) is mounted at a tail end of the motor seat (210) in an axial direction, and the plate body (310) is mounted between two end wall surfaces of the box seat (110) and the motor seat (210) that are relatively close to each other.

3. The pump unit according to claim 1, wherein the conductive element (400) comprises an inner conductive body and a housing covering an outer side of the conductive body, two ends of the conductive body are respectively provided as the first hot-pluggable connector (401) and the second hot-pluggable connector (402), and the first hot-pluggable connector (401) and the second hot-pluggable connector (402) extend out of the housing; and the housing and the conductive body are integrally formed.

4. The pump unit according to claim 3, wherein the housing of the conductive element (400) is at least partially located inside the plate body (310), the first hot-pluggable connector (401) and the second hot-pluggable connector (402) extend beyond a plate surface of the plate body (310), and the housing of the conductive element (400) and the plate body (310) are integrally formed.

5. The pump unit according to claim 3 or 4, wherein the housing of the conductive element (400) and the conductive body are integrally formed by injection molding; or/and, the housing of the conductive element (400) and the plate body (310) are integrally formed by injection molding.

6. The pump unit according to claim 1, wherein the first hot-pluggable connector (401) and the second hot-pluggable connector (402) of the conductive element (400) are staggered on two sides of the plate body (310) in a transverse direction relative to a pluggable direction and extend beyond a plate surface of the plate body (310); and the first hot-pluggable connector (401) and the second hot-pluggable connector (402) are electrically connected through a conductive connector (403), and the conductive connector (403) is at least partially wrapped inside the plate body (310).

7. The pump unit according to claim 6, wherein the conductive element (400) comprises an inner conductive body and a housing covering an outer side of the conductive body, two ends of the conductive body are respectively provided as the first hot-pluggable connector (401) and the second hot-pluggable connector (402), and the first hot-pluggable connector (401) and the second hot-pluggable connector (402) extend out of the housing; the housing and the conductive body are integrally formed by injection molding; and the housing and the plate body (310) are integrally formed by injection molding.

8. The pump unit according to claim 1, wherein the box seat (110) and the motor seat (210) are respectively provided with mounting holes (111) in communication with the inner cavities, the first hot-pluggable connector (401) passes through the mounting hole (111) on the box seat (110) and is electrically connected to the circuit control board (120), and the second hot-pluggable connector (402) passes through the mounting hole (111) on the motor seat (210) and is electrically connected to the motor body (220); and a seal (315) is arranged between the mounting hole (111) on the box seat (110) and a contact surface of the plate body (310) for sealing, and a seal (315) is arranged between the mounting hole (111) on the motor seat (210) and a contact surface of the plate body (310) for sealing.

9. The pump unit according to claim 8, wherein the conductive element (400) comprises an inner conductive body and a housing covering an outer side of the conductive body, two ends of the conductive body are respectively provided as the first hot-pluggable connector (401) and the second hot-pluggable connector (402), the first hot-pluggable connector (401) and the second hot-pluggable connector (402) extend out of the housing, and the housing of the conductive element (400) extends beyond a plate surface of the plate body (310) and extends into the mounting holes (111) on the box seat (110) and the motor seat (210) separately.

10. The pump unit according to claim 8, wherein a first annular wall (311) protruding outwards is arranged on a plate surface of the plate body (310) facing the box seat (110), a groove space is formed in the first annular wall (311), the first hot-pluggable connector (401) penetrates out from the groove space of the first annular wall (311), and the seal (315) is arranged in the groove space; an outside of the mounting hole (111) on the box seat (110) is provided with an annular mounting wall (112) protruding from the box seat (110), and a tail end of the annular mounting wall (112) is fittingly embedded in the groove space and abuts against the seal (315); and a seal (315) between the plate body (310) and the motor seat (210) adopts same arrangement.

11. The pump unit according to claim 10, wherein a ring of first rib (413) protruding outwards is formed on an upper portion of the housing of the conductive element (400), the first rib (413) is located in the groove space of the first annular wall (311), and an upper surface of the first rib (413) is flush with an upper surface of the seal (315) in the first annular wall (311).

12. The pump unit according to claim 3, wherein a plurality of groups of forming hole positions are provided on two opposite side surfaces of the housing of the conductive element (400) respectively, the forming hole positions extend inwards to expose the conductive body inside, and each side surface on two sides of the housing is provided with at least two groups of forming hole positions separately in a length extension direction of the conductive body.

13. The pump unit according to any one of claims 1 to 12, wherein a protective wall (314) protruding outwards is further provided on a plate surface of the side of the plate body (310) facing the motor seat (210), an open cavity for accommodating the second hot-pluggable connector (402) is formed in the protective wall (314), and the second hot-pluggable connector (402) is hidden in the open cavity.

14. The pump unit according to any one of claims 1 to 12, wherein the first hot-pluggable connector (401) is provided with a kidney-shaped hole as a plug connection hole position, a fixing connector passes through the plug connection hole position to press the first hot-pluggable connector (401) onto a plug end of the circuit control board (120), and then the first hot-pluggable connector (401) makes fixed contact with the plug end of the circuit control board (120) in an electrically communication manner.

15. The pump unit according to any one of claims 1 to 12, wherein an area of the plate surface of the plate body (310) at least completely covers an end area of the box seat (110) or the motor seat (210), the first hot-pluggable connector (401) and the second hot-pluggable connector (402) extend and are distributed in a thickness direction of the plate body (310), and the first hot-pluggable connector (401) or the second hot-pluggable connector (402) is distributed in a region close to a peripheral edge of the plate body (310).
